# FASCICULE DE BREVET EUROPEEN

(11) **EP 0 350 378 B1**
(45) Date de publication et mention de la délivrance du brevet: **25.08.1993**
(21) Numéro de dépôt: 89401885.2
(22) Date de dépôt: 30.06.1989
(51) Int. Cl.: H01J 21/10, H01J 9/02, H01J 31/12

(54) **Microcomposant électronique autoscellé sous vide, notamment diode, ou triode, et procédé de fabrication correspondant**
Unter Vakuum versiegeltes elektronisches Mikrobauteil, insbesondere Diode oder Triode, und dessen Herstellungsverfahren
Electronic micro component self-sealed under vacuum, especially a diode or triode, and its manufacturing process

(30) Priorité: 08.07.1988 FR 8809303
(43) Date de publication de la demande: 10.01.1990
(73) Titulaire: THOMSON-CSF, 75008 Paris (FR)
(72) Inventeur: Pribat, Didier, F-92045 Paris La Défense Cedex 67 (FR); Le Pesant, Jean-Pierre, F-92045 Paris La Défense Cedex 67 (FR)
(74) Mandataire: Chaverneff, Vladimir

(56) Documents cités:
- EP-A- 0 234 989
- US-A- 3 921 022
- US-A- 4 163 949
- US-A- 4 721 885

## Description

Le domaine de l'invention est celui de la réalisation de microcomposants appartenant à la famille des tubes à vide, du type des diodes, triodes, et composants électroluminescents.

On assiste ces dernières années à un regain d'intérêt concernant les tubes à vide - particulièrement les microtubes - pour des application spéciales telles que les composants très large bande et les composants durcis aux radiations.

Ce regain d'intérêt a été stimulé par l'application à la fabrication des tubes des procédés technologiques utilisés par l'industrie électronique pour le micro-usinage et la fabrication des composants à base de semiconducteurs. En effet, si l'on sait depuis fort longtemps que le fait de manipuler des électrons dans le vide permet de leur imprimer des vitesses de déplacement supérieures à celles obtenues dans les solides, les technologies de fabrication des tubes à vide ne permettaient pas une miniaturisation compatible avec un abaissement des temps d'accès jusqu'à des valeurs comparables à celles obtenues sur les composants et circuits à base de semiconducteurs (notamment du fait des résistances et capacités des lignes de commande). De plus, les cathodes des tubes à vide fonctionnent par émission thermoélectrique, ce qui nécessite un chauffage de la source et donc un environnement particulier de cette dernière. Les effets de charge d'espace à l'avant des cathodes thermoélectroniques nécessitent d'autre part l'utilisation de tensions élevées, de façon à atteindre des valeurs de champ électrique compatibles avec l'extraction d'un nombre d'électrons suffisant.

La fabrication de réseaux de micropointes a l'aide des technologies de la microélectronique (voir par exemple C . A. SPINDT et coll. Journal of Applied Physics, Vol. 47, december 1976, p. 5248) a permis de réaliser des microcathodes a émission de champ de dimensions comparables à celles des composants électroniques à l'état solide. Ces microcathodes ont été utilisées pour la fabrication de microcanons à électrons (U.S. Patent 3,753,022, U.S. Patent 4,663,559) ainsi que pour la fabrication de réseaux matriciels de micro-canons à électrons (U. S. Patent 4,498,952). Las avantages reconnus associés à la réduction des dimensions sont liés à la possibilité d'obtention de champs électriques très intenses ( > 10⁷ V/cm) avec des tensions d'extraction modérées (quelques centaines de Volts). Dans le cas de composants de type triode, si la distance anode-microcathode est faible, les effets de charge d'espace à l'avant des microcathodes peuvent être éliminés pour des valeurs de tensions anode-cathode relativement faibles ; ainsi, les porteurs sont accélérés à leur vitesse finale plus rapidement que dans les solides, ce qui permet de diminuer les temps de transit. Les temps d'accès (RC des lignes de commandes) sont d'autre part identiques à ceux obtenus sur les dispositifs à l'état solide et les vitesses de déplacement des électrons dans le vide peuvent dans la pratique atteindre quelques 10⁸ cm/s à comparer à quelques 10⁷ cm/s dans les meilleurs semiconducteurs (InSb) .

Les microtubes à vide fabriqués à base de microcathodes à effet de champ permettent donc la fabrication de composants potentiellement plus rapides que les composants à l'état solide à base de semiconducteurs.

De tels composants ont déjà été réalisés et en particulier à partir de technologies utilisées pour la fabrication de circuits intégrés au silicium (H.F. GRAY et coll. IEDM 1986, 33-1, p. 776).

Il s'agit d'une approche de type "planer" où la source, la grille et l'anode sont disposées dans un même plan qui est le plan supérieur du substrat.

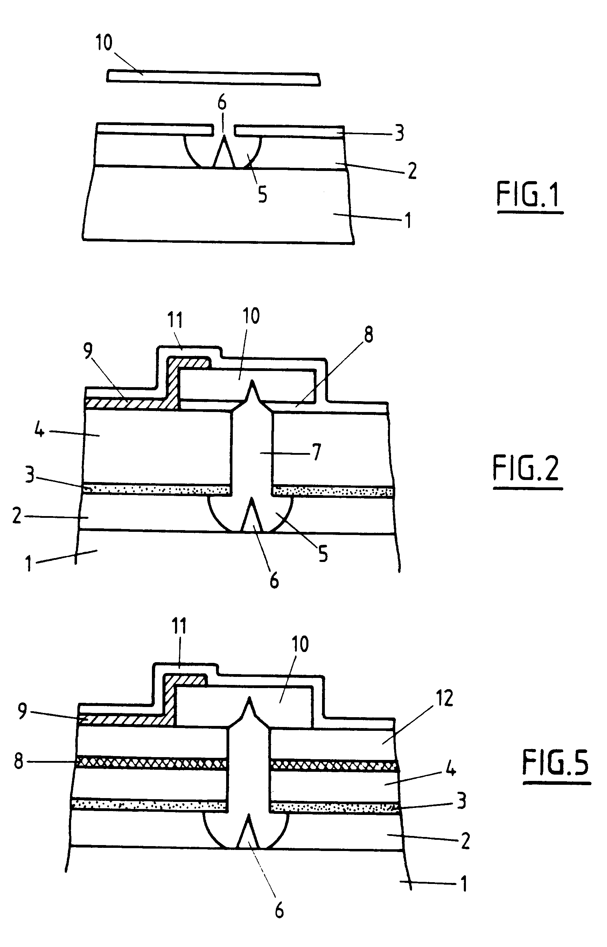

Une autre approche a aussi été utilisée dans laquelle l'anode (10) est une plaque métallique située en vis-à-vis de la cathode (6) et de la grille (3) (structure du type "empilée"). Cette structure est schématisée en Fig. 1. La cathode (6) est formée sur un substrat (1), au sein d'une cavité (5) creusée dans une couche diélectrique (2). Des structures similaires sont décrites dans les documents US-A-4 163 949 et EP-A-0 234 989.

L'inconvénient de ces structures est qu'elles ne peuvent fonctionner que sous un vide poussé (133.10⁻¹⁰ Pascals) et que en particulier des adsorptions diverses sont susceptibles de modifier notablement les propriétés d'émission des micropointes. Pour éviter ce genre de phénomène, il faut prévoir des moyens de scellement "in situ" en ampoule de verre, ou autre contenant, de façon à ne pas remettre à l'atmosphère les micropointes après leur fabrication. Lorsqu'on utilise un réseau de micropointes, il faut aussi veiller à maintenir rigoureusement la distance anode grille, de façon à ne pas induire une dispersion trop importante des caractéristiques des composants. Ajoutons aussi que la définition et le positionnement d une anode individuelle (du même ordre de grandeur dimensionnel que la cathode) en vis-à-vis de la cathode peut poser de sérieux problèmes technologiques. Il est donc délicat d'individualiser chaque micropointe pour en faire un composant élémentaire de type transistor.

L'invention permet de pallier ces différents inconvénients.

A cet effet, l'invention a pour objet un microcomposant électronique notamment diode, triode, ou composant électroluminescent, du type à structure empilée avec microcathode à émission de champ formée dans une cavité sous vide, surmontée le cas échéant d'une grille de commande métallique et avec anode placée à distance de ladite microcathode, l'espacement entre la pointe de la microcathode et l'anode étant défini par un diélectrique solide formé par dépôt, ce microcomposant comportant au moins un micro-volume abritant chacun une microcathode, caractérisé par le fait que chaque microvolume est autoscellé par l'anode.

Selon l'invention, un tel microcomposant électronique est avantageusement obtenu à l'aide d'un procédé de fabrication comportant notamment les étapes successives de :
- formation d'une microcavité par dépôt sur un substrat conducteur d'une première couche diélectrique, d'une couche conductrice de grille, d'une seconde couche diélectrique, puis par creusement jusqu'au substrat conducteur de réception de ladite microcathode ;
- dépôt par évaporation sous vide poussé de ladite couche d'anode de façon à former simultanément la microcathode au fond de la microcavité, et à sceller parfaitement ladite cavité.

De façon avantageuse, ladite couche d'anode est déposée sous vide poussé par évaporation en incidence normale, ladite opération de dépôt assurant simultanément la formation de ladite microcathode au fond de ladite cavité.

Selon un autre mode de réalisation avantageux de l'invention, ledit dépôt de la couche d'anode est précédé d'une étape de formation de la microcathode au fond de ladite cavité, par dépôt en évaporation sous vide poussé sous incidence normale, ladite couche d'anode étant ensuite déposée par évaporation sous incidence rasante au moins au niveau de l'ouverture de ladite cavité, de façon à ne pas polluer ladite cathode précédemment formée.

Dans ce dernier cas, qui correspond généralement à un mode de réalisation dans lequel le matériau formant la microcathode est différent du matériau formant la couche d'anode, il est avantageux que ladite étape de formation de la microcathode soit d'une part précédée par une étape de dépôt d'une couche temporaire constituée en un matériau spécifique, ledit matériau spécifique étant sélectivement soluble par rapport au matériau constituant la microcathode, et soit d'autre part suivie par une étape de dissolution de ladite couche temporaire.

D'autres caractéristiques et avantages de l'invention apparaîtront à la lecture suivante de la description de quelques modes de réalisation de l'invention donnés à titre illustratif et non limitatif, et des dessins annexés dans lesquels :
- la figure 1 représente un microcomposant de type triode, à structure empilée, de technique connue ;
- la figure 2 est un mode de réalisation préférentielle du microcomposant autoscellé suivant l'invention ;
- la figure 3 est constituée par une succession de 8 schémas illustrant les étapes successives d'un premier mode de réalisation préférentiel du procédé de fabrication du microcomposant suivant l'invention ;
- la figure 4 est un schéma illustrant une étape particulière d'un second mode de réalisation du procédé de fabrication de l'invention, après dissolution d'une couche temporaire de travail (opération de "lift off") ;
- la figure 5 est un schéma illustrant la structure d'un troisième mode de réalisation du microcomposant suivant l'invention avec couche de titane formant "getter" prise en sandwich entre deux couches diélectriques ;
- les figures 6 et 7 sont des schémas en coupe illustrant des aspects structurels d'un mode de réalisation préférentiel du microcomposant suivant l'invention, dans une version permettant l'obtention de courants d'émission élevés ;
- la figure 8 est le schéma d'un composant électroluminescent obtenu selon le procédé de l'invention ;
- la figure 9 est une vue partielle en perspective, avec arraché, d'un dispositif d'affichage matriciel conforme à l'invention.

La structure de différentes versions d'un microcomposant de type triode, selon l'invention, est représentée en figures 2, 5,7 et 8.

Comme on peut le voir en figure 2, le microcomposant est constitué successivement d'un substrat conducteur 1, surmonté d'une première couche de diélectrique 2, d'une couche métallique 3 servant de grille d'extraction des électrons, et d'une seconde couche 4 de diélectrique. Une cavité 7, ainsi qu'une sous-cavité 5 sont gravées dans les couches 4, 3, 2, pour pouvoir loger une cathode en forme de micropointe 6.

La seconde couche de diélectrique 4 est pour sa part surmontée d'une couche métallique 8 formant "getter", servant à favoriser et poursuivre le maintien du vide de la cavité 5, 7 après scellement.

L'anode 10 vient fermer et sceller sous vide la cavité 5, 7.

Le composant comporte également une patte 9 de connection de l'anode 10 ainsi qu'un revêtement passivant 11.

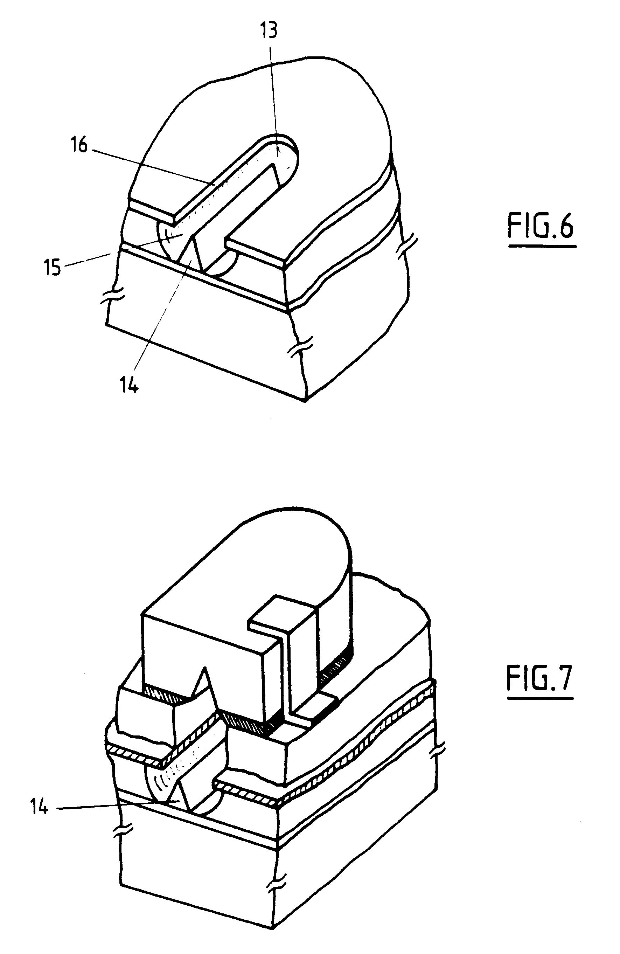

Dans le mode de réalisation de la figure 5, la couche 8 formant "getter" est insérée en sandwich entre la seconde couche diélectrique 4, et une troisième couche de diélectrique 12.

Enfin, dans la version de la figure 7, correspondant à la réalisation d'un microcomposant à courants d'émission élevés, on notera que la cathode 14 est réalisée en forme prismatique. Dans ce cas, la cavité 13 réalisée est avantageusement de section oblongue, au lieu de la section sensiblement circulaire des modes de réalisation des figures 2 et 5 à cathode 6 en micropointe.

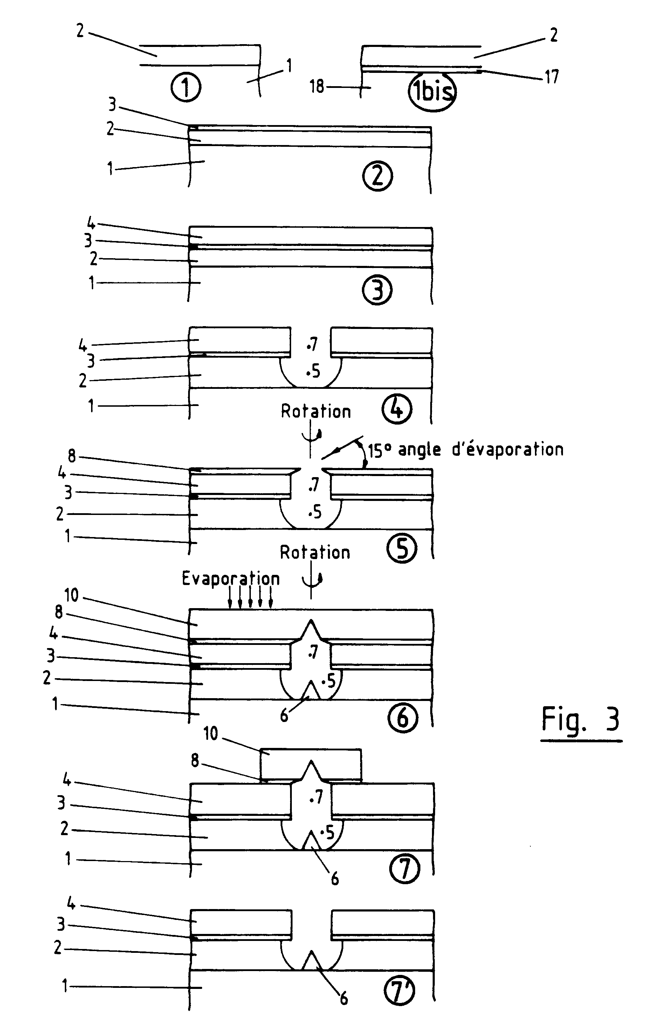

Un premier procédé de réalisation avantageux du composant suivant l'invention est illustré, par étapes successives, par les schémas de la figure 3. Les numéros de chaque schéma de la figure 3 correspondent aux étapes suivantes, données à titre indicatif :

### Etape (1)

On forme une première couche de diélectrique 2 tel que par exemple SiO₂ (épaisseur 1 à 1,5 µm) par oxydation (cas d'un substrat de silicium) ou par dépôt, sur un substrat conducteur 1.

### Etape (1 bis)

Etape alternative à l'étape (1) ; on dépose successivement une couche conductrice 17 métallique (épaisseur 0,2 à 1 µm environ) et une couche diélectrique 2 (SiO₂...) d'épaisseur 1 à 1,5 µm sur un substrat isolant 18 (plaque de verre, d'alumine, etc...).

### Etape (2)

On dépose une couche métallique de grille 3 (0,2 à 0,3 µm environ) sur l'ensemble précédent.

### Etape (3)

On dépose une couche de diélectrique 4 tel que par exemple Si₃N₄, sur l'ensemble précédent (épaisseur 2 à 20 µm environ).

### Etape (4)

On grave le diélectrique 4 et la grille 3 dans une première opération de creusement. Dans le cas d'une cathode à micropointe 6, la cavité 7 est de section sensiblement circulaire. Le diamètre de l'ouverture 7 est alors préférentiellement de l'ordre de 1,5 à 3 µm.

On grave le diélectrique 2 dans une deuxième opération, de façon à réaliser une sous-gravure 5 sous la grille 3. Dans le cas où l'on veut une forte densité de pointes par unité de surface, la sous-gravure 5 sera limitée, voire inexistante.

### Etape (5)

Le substrat étant animé d'un mouvement de rotation, on dépose en incidence rasante (typiquement < 15°) une couche de titane (épaisseur d'environ 0,1 à 0,5 µm) qui servira à fixer le diamètre de l'embase de la micropointe 6. De plus, la couche de titane servira aussi de "getter" 8 dans le microvolume 5, 7 qui va abriter la micropointe 6, de façon éventuellement à améliorer le vide résiduel dans ce microvolume. Il faut noter que la couche de titane est déposée de façon à ne pas obstruer totalement l'ouverture 7 précédemment creusée par gravure.

### Etape (6)

Le substrat étant de nouveau animé d'un mouvement de rotation on évapore selon une incidence normale au plan du substrat une deuxième couche métallique (Molybdène par exemple) d'épaisseur 1 à 6 µm environ. Cette deuxième couche métallique sert à former la micropointe 6 d'une part et l'anode 10 d'autre part.

Selon l'invention le vide résiduel avant l'opération d'évaporation de la couche métallique ci-dessus décrite est de l'ordre de 133.10⁻¹⁰ Pascals. On se réserve de plus la possibilité de chauffer le substrat vers 700-800° C avant dépôt, de façon à désorber d'éventuelles impuretés gazeuses de l'intérieur des microcavités et obtenir un meilleur vide à l'intérieur de ces dernières.

Le vide résiduel ayant été atteint (environ 133.10⁻¹⁰ Pascals) et le substrat ayant été suffisamment chauffé, l'évaporation de la couche métallique est effectuée, de façon telle que l'épaisseur de l'anode 10 soit suffisante pour sceller le microvolume 5, 7. On pourra, à cet effet, effectuer après dépôt un recuit in situ du métal constituant l'anode 10 de façon à augmenter la taille moyenne des grains d'une part (donc la résistance mécanique), et à améliorer l'adhérence de l'ensemble getter 8 et anode 10 sur le diélectrique 4 d'autre part.

Pour résumer, la couche métallique déposée au cours de l'étape (6) sert donc :
(i) à former la cathode micropointe 6,
(ii) à sceller le microvolume 5, 7 abritant la micropointe 6, le vide régnant dans ce microvolume étant de l'ordre de grandeur du vide résiduel (133.10⁻¹⁰ Pascals),
(iii) à former l'anode 10 dont la géométrie est ultérieurement définie par gravure.

### Etape (7)

La couche métallique déposée est maintenue en place et gravée selon la configuration que l'on a définie pour l'anode. Ainsi, la gravure permet de localiser l'anode 10 en regard de la micropointe 6 et donc d'individualiser le composant microtube triode.

Enfin, au cours d'une dernière étape permettant d'obtenir la structure finale de la Fig.2, on dépose et grave les connexions 9 de commande de l'anode 10 et on dépose un passivant (phosphate silicate glass par exemple) qui protège l'anode 10 contre les différentes agressions atmosphériques.

Cependant, le matériau de nature métallique déposé lors de l'étape (6) et servant en premier lieu à réaliser la microcathode 6 peut aussi être choisi parmi les éléments ou les composés présentant un travail de sortie faible (TiC, LaB₆...).

Dans ce cas, on peut avoir intérêt à utiliser un matériau différent pour constituer l'anode 10. Pour ce faire, il est nécessaire d'introduire une variante à partir de l'étape (5) qui peut être illustrée par les étapes (5') à (8') décrites ci-après :

### Etape (5')

On dépose en incidence rasante une couche d'un matériau que l'on pourra attaquer de façon très sélective par rapport au matériau constituant la micropointe. Ce matériau n'est plus nécessairement du titane. On réalise également, en utilisant ce matériau et de même que sur le schéma de la fig. 3 correspondant à l'étape 5, une couche qui va servir à fixer le diamètre de l'embase de la pointe (dépôt en incidence rasante).

### Etape (6')

On évapore en incidence normale (de même que sur le schéma correspondant à l'étape (6)), le matériau constitutif de la microcathode (LaB₆, TiC...).

### Etape (7')

On dissout le dépôt réalisé en (5') de façon à faire disparaître les deux couches déposées sur le diélectrique 4 (opération de "lift off") aux étapes (5') et (6'). La structure obtenue est représentée en Fig. 3, (7').

### Etape (8')

On dépose en Incidence rasante sous ultra-vide (133-10⁻¹⁰ Pascals) la couche métallique constitutive de l'anode 10 de façon à ne pas polluer la micropointe déjà présente.

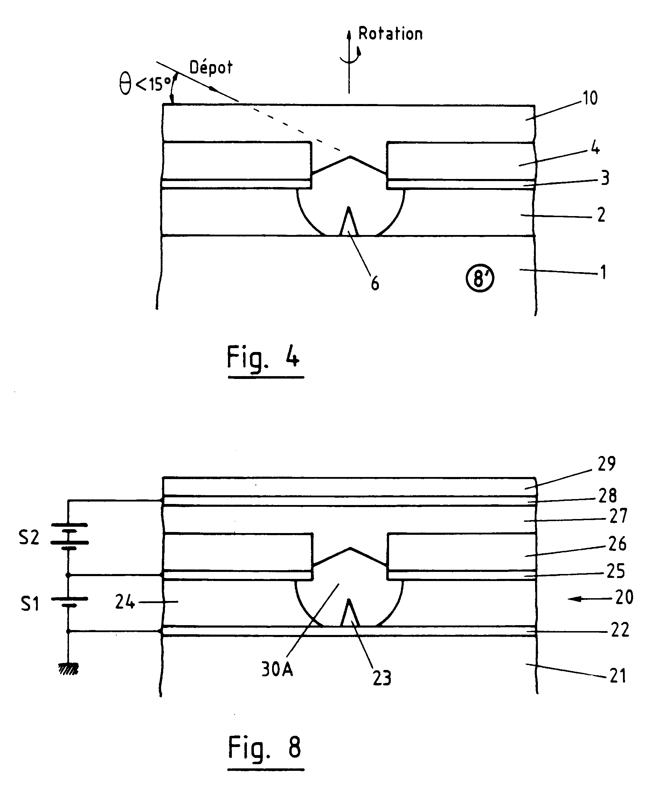

En particulier, l'épaisseur du diélectrique 4 est calculée en fonction du diamètre de l'ouverture 7 et de l'angle d'évaporation de façon telle que le métal que l on évapore pour sceller l'orifice et faire fonction d'anode 10 ne puisse contaminer la micropointe 6. Le schéma du microcomposant ainsi réalisé est représenté en figure 4.

On effectue éventuellement un dégazage préalable de la structure (7') avant dépôt en la chauffant dans l'enceinte à vide comme noté plus haut. De même après dépôt on pourra effectuer un recuit de la métallisation supérieure pour les raisons déjà exposées.

L'étape (7) telle que décrite précédemment est conservée.

Afin d'obtenir l'effet getter, on peut soit utiliser une grille 3 en titane, soit déposer avant la métallisation de l'anode 10 une couche 8 de titane (en incidence rasante), soit utiliser une anode 10 en titane, soit encore introduire une couche en sandwich entre deux couches diélectriques (4, 12) comme déjà décrit en relation avec la Fig. 5.

L'invention a été décrite jusqu'à présent en s'appuyant sur un dispositif de type triode, mais il va sans dire que si l'on supprime la grille 3 et que l'on dimensionne correctement de façon connue l'épaisseur du diélectrique 4 (distance anode-cathode), on obtient un dispositif fonctionnent en diode.

Enfin, si l'on veut obtenir des courants d'émission élevés, on peut utiliser soit une rangée de pointes, soit un microvolume 14 de forme prismatique (voir C.A. SPINDT et Coll. Application of Surface Science 16, 268, 1983) obtenu de façon décrite en (6), mais en remplaçant les ouvertures circulaires 7 par des ouvertures 13 de formes oblongues (Fig. 6, 7).

De même que lors de l'étape (6) ou lors de l'étape (8'), le scellement s'effectuera par dépôt sous vide poussé et la longueurs du prisme 14 ainsi que l'épaisseur de la couche de scellement (anode 10) seront adaptées pour des raisons mécaniques évidentes.

L'invention trouve notamment application pour la fabrication de composants durcis, composants haute température, composants large bande, circuits intégrés, etc...

Une autre application de l'invention concerne les dispositifs émetteurs de lumière.

En particulier dans le domaine de l'émission lumineuse par cathodoluminescence, des dispositifs ont été étudiés à partir de réseaux de microcathodes (R. Meyer, A. Ghis, Ph. Rambaud, F. Muller - Japan Display Proceeding 1986 - page 512). Ces dispositifs utilisent des cellules dans lesquelles les micropointes et les grilles sont fabriquées séparément sur un premier substrat et les luminophores sont déposés sur une contre-électrode (déposée sur une lame de verre, par exemple), distante d'environ 100 µm du plan de grille, cet ensemble étant supporté par un deuxième substrat distinct du premier. L'ensemble des deux substrats est ensuite assemblé, mis sous vide et scellé. Il va sans dire que le positionnement de la plaque anode à une distance constante de 100 µm du plan de grille de la plaque cathode/grille pose des problèmes technologiques. De plus le scellement sous vide de la plaque anode et de la plaque supportant grilles et cathodes est aussi susceptible de créer des problèmes de vieillissement. En effet, la moindre fuite affecte les propriétés d'émission de l'ensemble de microcathodes.

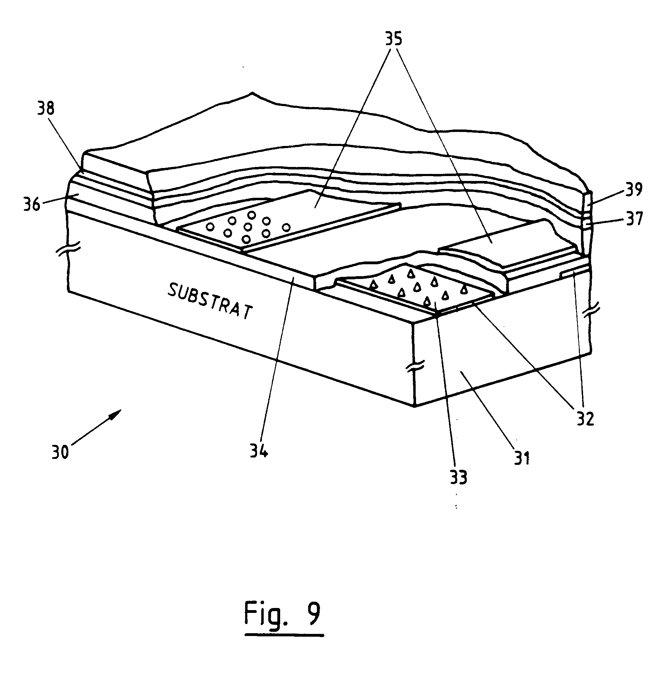

La présente invention permet de remédier à ces différents inconvénients, puisque le luminophore (Zn0 par exemple) est directement intégré dans chaque point d'émission lumineux dans un arrangement tel que celui de la figure 8.

Sur cette figure 8, l'élément de microcomposant 20 comporte respectivement : un substrat (de verre par exemple) 21, une bande métallique 22 (Mo par exemple), une microcathode 23 en pointe (en Mo,TiC,LaB₆...), un premier diélectrique 24, une grille 25, une anode en matériau luminophore (Zn0 par exemple) 27, une couche ITO (oxyde d'indium et d'étain) 28, et un encapsulant translucide 29. Toutes ces couches sont déposées selon le procédé décrit ci-dessus. Un vide poussé règne dans la micro-cavité 30A déterminée entre la microcathode 23 et le luminophore 27. Les couches 22,25 et 28 sont reliées à des sources de tension appropriées S1 et S2.

En cas de fuite locale, seule la microcathode comprise dans le volume incriminé voit ses propriétés d'émission affectées.

Selon un mode de réalisation avantageux de l'invention, on peut réaliser un dispositif à affichage matriciel de grande surface tel que celui de la figure 9. Ce dispositif 30 comporte sur un substrat 31 des lignes de cathodes 32 en matériau conducteur sur lesquelles sont déposées, selon le procédé décrit ci-dessus, des microcathodes 33. Dans l'exemple de la figure 9, neuf microcathodes définissent un point lumineux. Bien entendu, le nombre de microcathodes pour chaque point lumineux est fonction de la dimension des points et de la définition requise. Pour des microcathodes d'un diamètre d'environ 2 à 5 µm, on peut par exemple avoir une densité d'environ 625 microcathodes pour un point lumineux de dimensions 250 µm x 250 µm.

La structure 30 comporte ensuite un premier diélectrique 34, des colonnes de grilles 35 dont les micro-ouvertures sont, bien entendu en vis-à-vis des microcathodes, un second diélectrique 36 servant d'intercalaire, une couche luminophore 37, une couche de ITO 38, et un encapsulant translucide 39.

## Revendications

1. Microcomposant électronique, notamment diode, triode, ou composant électroluminescent, du type à structure empilée avec microcathode (6,14) à émission de champ formée dans une cavité (5,7,15) sous vide surmontée le cas échéant d'une grille de commande métallique (3), avec une anode (10) placée à distance de la microcathode, l'espacement entre la pointe de la microcathode et l'anode étant défini par un diélectrique solide formé par dépôt (2,4), ce microcomposant comportant au moins un micro-volume (5,7,15) abritant chacun une microcathode, caractérisé par le fait que chaque microvolume est autoscellé par l'anode.

2. Microcomposant selon la revendication 1, caractérisé par le fait que l'anode est constituée sous forme d'une couche métallique déposée sur la couche diélectrique.

3. Microcomposant selon la revendication 1, caractérisé en ce que ladite cavité (5,15) comporte au moins un élément de paroi (8 ; 3,10) formant "getter".

4. Microcomposant selon la revendication 3, caractérisé par le fait que le matériau du "getter" comporte du titane.

5. Microcomposant selon l'une quelconque des revendications précédentes, caractérisée en ce que la microcathode (6,14) est constituée en un matériau à travail de sortie faible, tel que Mo, TiC ou LaB₆.

6. Microcomposant électroluminescent selon l'une quelconque des revendications précédentes, caractérisé en ce que ladite couche d'anode (10) est une couche de luminophore revêtue d'une couche conductrice translucide.

7. Microcomposant selon la revendication 6, caractérisé par le fait que la couche conductrice revêtant la couche d'anode est en oxyde d'indium et d'étain.

8. Microcomposant selon l'une des revendications 6 ou 7, caractérisé par le fait que la couche conductrice translucide est elle-même revêtue d'une couche translucide d'encapsulation.

9. Ecran d'affichage formé à partir de microcomposants selon l'une quelconque des revendications précédentes, caractérisé par le fait que les microcathodes sont groupées en lignes de cathodes (32) et que les grilles sont sous forme de bandes parallèles entre elles (35), perpendiculaires aux lignes de cathodes pour former un écran d'affichage matriciel.

10. Procédé de fabrication d'un microcomposant électronique, notamment diode, triode, ou composant électroluminescent, du type à structure empilée avec microcathode (6,14) à émission de champ formée dans une cavité (5,7,15) sous vide surmontée d'une grille de commande métallique (3), avec une anode (10) placée à distance de la microcathode, caractérisé par le fait qu'il comporte notamment les étapes successives de :
- formation d'une microcavité (5,7,15) par dépôt sur un substrat conducteur (1,7) d'une première couche diélectrique (2), d'une couche conductrice de grille (3), d'une seconde couche diélectrique (4), puis par creusement jusqu'au substrat conducteur (1,17) de réception de ladite microcathode (6,14) ;
- dépôt par évaporation sous vide poussé de ladite couche d'anode (10) de façon à simultanément former la microcathode (6,14) au fond de la microcavité, et à sceller parfaitement ladite cavité (5,7,15).

11. Procédé selon la revendication 10, caractérisé en ce que ladite couche d'anode (10) est déposée par évaporation sous vide poussé en incidence normale.

12. Procédé selon la revendication 10, caractérisé en ce que ledit dépôt de la couche d'anode (10) est précédé d'une étape de formation de la microcathode (6,14) au fond de ladite cavité (5,7,15), par dépôt en évaporation sous vide poussé sous incidence normale, ladite couche d'anode (10) étant ensuite déposée par évaporation sous incidence rasante au moins au niveau de l'ouverture de ladite microcavité (5,7,15), de façon à ne pas polluer ladite cathode (6,14) précédemment formée.

13. Procédé selon la revendication 12, caractérisé en ce que ladite étape de formation de la microcathode (6,14) est d'une part précédée par une étape de dépôt d'une couche temporaire constituée en un matériau spécifique, ledit matériau spécifique étant sélectivement soluble par rapport au matériau constituant la microcathode (6,14), et est d'autre part suivie par une étape de dissolution de ladite couche temporaire.

14. Procédé suivant la revendication 10, caractérisé en ce que ladite étape de creusement de la microcavité (5,7,15) est précédée par une étape de dépôt d'une couche (8), constituée en un matériau formant "getter", sur la deuxième couche diélectrique.

15. Procédé suivant l'une quelconque des revendications 10 à 14, caractérisé en ce que ladite étape de dépôt d'anode (10) et/ou de microcathode (6,14), et, le cas échéant de couche formant "getter" (8) est réalisée en animant le substrat (1) d'un mouvement de rotation.

16. Procédé suivant l'une des revendications 10 à 15, caractérisé en ce que ledit dépôt de la couche d'anode (10) est effectué sous un vide de l'ordre de 10⁻¹⁰ Torr.

17. Procédé suivant l'une des revendications 10 à 16, caractérisé en ce qu'on réalise, avant dépôt de ladite couche d'anode (10), une opération de dégazage par chauffage dudit substrat conducteur (1) à une température d'environ 700 à 800° C.

18. Procédé suivant l'une des revendications 10 à 17, caractérisé en ce que ladite opération de dépôt de ladite couche d'anode (10) est suivie par une étape de traitement thermique "in situ".

19. Procédé suivant l'une des revendications 10 à 18, caractérisé en ce que ladite couche d'anode (10) déposée a une épaisseur comprise entre environ 1 micron et environ 6 microns.

20. Procédé suivant l'une des revendications 10 à 19, caractérisé en ce que ladite couche de grille (3) déposée a une épaisseur comprise entre environ 0,1 micron et environ 0,3 micron.

21. Procédé suivant l'une des revendications 10 à 20, caractérisé en ce que ladite couche formant "getter" (8) déposée est d'une épaisseur comprise entre environ 0,1 et environ 0,5 microns.

## Claims

1. Electronic microcomponent, especially a diode, triode, or electroluminescent component, of the stacked structure type with a field emission microcathode (6, 14) formed in a cavity (5, 7, 15) under vacuum and surmounted, if appropriate, by a metal control grid (3), with an anode (10) placed at a distance from the microcathode, the spacing between the point of the microcathode and the anode being defined by a solid dielectric formed by deposition (2, 4), this microcomponent including at least one microvolume (5, 7, 15) each sheltering a microcathode, characterised in that each microvolume is self-sealed by the anode.

2. Microcomponent according to Claim 1, characterised in that the anode is constituted in the form of a metal layer deposited on the dielectric layer.

3. Microcomponent according to Claim 1, characterised in that the said cavity (5, 15) includes at least one "getter"-forming wall element (8; 3, 10).

4. Microcomponent according to Claim 3, characterised in that the material of the "getter" includes titanium.

5. Microcomponent according to any one of the preceding claims, characterised in that the microcathode (6, 14) is constituted in a material with low work function, such as Mo, TiC or LaB₆.

6. Electroluminescent microcomponent according to any one of the preceding claims, characterised in that the said anode layer (10) is a layer of luminophore coated with a translucent conducting layer.

7. Microcomponent according to Claim 6, characterised in that the conducting layer coating the anode layer is of indium and tin oxide.

8. Microcomponent according to one of Claims 6 or 7, characterised in that the translucent conducting layer is itself coated with a translucent encapsulation layer.

9. Display screen formed from microcomponents according to any one of the preceding claims, characterised in that the microcathodes are grouped in lines of cathodes (32) and in that the grids are in the form of mutually parallel bands (35), perpendicular to the lines of cathodes, in order to form a matrix display screen.

10. Method of fabricating an electronic microcomponent, especially a diode, triode, or electroluminescent component, of the stacked structure type with a field emission microcathode (6, 14) formed in a cavity (5, 7, 15) under vacuum surmounted by a metal control grid (3), with an anode (10) placed at a distance from the microcathode, characterised in that it includes especially the successive steps of:
- formation of a microcavity (5, 7, 15) by deposition on a conducting substrate (1, 7) of a first dielectric layer (2), of a conducting grid layer (3), of a second dielectric layer (4), then by hollowing down to the conducting substrate (1, 17) for receiving the said microcathode (6, 14);
- deposition, by evaporation under hard vacuum, of the said anode layer (10) so as simultaneously to form the microcathode (6, 14) at the bottom of the microcavity, and to seal the said cavity (5, 7, 15) perfectly.

11. Method according to Claim 10, characterised in that the said anode layer (10) is deposited by evaporation under hard vacuum at normal incidence.

12. Method according to Claim 10, characterised in that the said deposition of the anode layer (10) is preceded by the step of formation of the microcathode (6, 14) at the bottom of the said cavity (5, 7, 15), by deposition, in evaporation under hard vacuum at normal incidence, the said anode layer (10) being next deposited by evaporation at grazing incidence at least at the site of the aperture of the said microcavity (5, 7, 15), so as not to contaminate the said previously formed cathode (6, 14).

13. Method according to Claim 12, characterised in that the said step of formation of the microcathode (6, 14) is, on the one hand, preceded by a step of deposi tion of a temporary layer consisting of a specific material, the said specific material being selectively soluble with respect to the material constituting the microcathode (6, 14), and is, on the other hand, followed by a step of dissolving the said temporary layer.

14. Method according to Claim 10, characterised in that the said step of hollowing the microcavity (5, 7, 15) is preceded by a step of depositing a layer (8) consisting of a "getter"-forming material on the second dielectric layer.

15. Method according to any one of Claims 10 to 14, characterised in that the said step of deposition of anode (10) and/or of microcathode (6, 14), and, if appropriate, of "getter"-forming layer (8) is carried out by giving the substrate (1) a rotational movement.

16. Method according to one of Claims 10 to 15, characterised in that the said deposition of the anode layer (10) is carried out under a vacuum of the order of 10⁻¹⁰ Torr.

17. Method according to one of Claims 10 to 16, characterised in that, before depositing the said anode layer (10), an outgassing operation is carried out by heating the said conducting substrate (1) to a temperature of approximately 700 to 800°C.

18. Method according to one of Claims 10 to 17, characterised in that the said operation of depositing the said anode layer (10) is followed by a step of "in situ" heat treatment.

19. Method according to one of Claims 10 to 18, characterised in that the said deposited anode (10) layer has a thickness lying between about 1 micron and about 6 microns.

20. Method according to one of Claims 10 to 19, characterised in that the said deposited grid (3) layer has a thickness lying between about 0.1 micron and about 0.3 micron.

21. Method according to one of Claims 10 to 20, characterised in that the said deposited "getter"-forming layer (8) has a thickness lying between about 0.1 and about 0.5 microns.

## Patentansprüche

1. Elektronisches Mikrobauelement, insbesondere Diode, Triode oder Elektrolumineszenz-Bauelement vom Typ mit Stapelstruktur mit einer Mikrokatode (6, 14) mit Feldemission, die in einer Ausnehmung (5, 7, 15) unter Vakuum gebildet ist und über der je nach Fall ein metallisches Steuergitter (3) angebracht ist, mit einer Anode (10), die im Abstand von der Mikrokatode angebracht ist, wobei der Abstand zwischen der Spitze der Mikrokatode und der Anode durch ein durch Ablagerung gebildetes festes Dielektrikum (2, 4) definiert ist, wobei das Mikrobauelement wenigstens einen Mikroraum (5, 7, 15) aufweist, der jeweils eine Mikrokatode abschirmt, dadurch gekennzeichnet, daß jeder Mikroraum durch die Anode selbstversiegelt ist.

2. Mikrobauelement nach Anspruch 1, dadurch gekennzeichnet, daß die Anode in Form einer Metallschicht gebildet ist, die auf der dielektrischen Schicht angebracht ist.

3. Mikrobauelement nach Anspruch 1, dadurch gekennzeichnet, daß die Ausnehmung (5, 15) wenigstens ein Wandelement (8; 3, 10) aufweist, das ein "Getter" bildet.

4. Mikrobauelement nach Anspruch 3, dadurch gekennzeichnet, daß das "Getter"-Material Titan ist.

5. Mikrobauelement nach einem der vorhergehenden Ansprüche, dadurch gekennzeichnet, daß die Mikrokatode (6, 14) aus einem Material mit niedriger Austrittsarbeit wie Mo, TiC oder LaB₆ ist.

6. Elektrolumineszierendes Mikrobauelement nach einem der vorhergehenden Ansprüche, dadurch gekennzeichnet, daß die Schicht der Anode (10) eine leuchtstoffschicht ist, die mit einer durchscheinenden Leiterschicht überzogen ist.

7. Mikrobauelement nach Anspruch 6, dadurch gekennzeichnet, daß die Leiterschicht, die die Anodenschicht überzieht, aus Indiumoxid und Zinn besteht.

8. Mikrobauelement nach einem der Ansprüche 6 oder 7, dadurch gekennzeichnet, daß die durchscheinende Leiterschicht ihrerseits mit einer durchscheinenden Einkapselungsschicht überzogen ist.

9. Mittels Mikrobauelementen gemäß einem der vorhergehenden Ansprüche gebildeter Anzeigeschirm, dadurch gekennzeichnet, daß die Mikrokatoden in Katodenzeilen (32) angeordnet sind und daß die Gitter in Form von zueinander parallelen Streifen (35) gebildet sind, die senkrecht zu den Katodenzeilen verlaufen, um einen Matrix-Anzeigeschirm zu bilden.

10. Verfahren zum Herstellen eines elektronischen Mikrobauelements, insbesondere einer Diode, einer Triode oder eines Elektrolumineszenz-Bauelements vom Typ mit Stapelstruktur mit einer Mikrokatode (6, 14) mit Feldemission, die in einer Ausnehmung (5, 7, 15) im Vakuum gebildet ist und auf der ein metallisches Steuergitter (3) angebracht ist, mit einer Anode (10), die im Abstand von der Mikrokatode angeordnet ist, dadurch gekennzeichnet, daß es insbesondere die folgenden Stufen enthält:
- Bilden einer Mikroausnehmung (5, 7, 15) durch Aufbringen einer ersten dielektrischen Schicht (2), einer leitenden Gitterschicht (3), einer zweiten dielektrischen Schicht (4) auf einem Leitersubstrat (1, 7), und dann durch Aushöhlen bis zu dem Leitersubstrat (1, 17) für die Aufnahme der Mikrokatode (6, 14);
- Aufbringen der Anodenschicht (10) durch Verdampfung im Hochvakuum in der Weise, daß gleichzeitig die Mikrokatode (6, 14) am Boden der Mikroausnehmung gebildet wird und die Ausnehmung (5, 7, 15) vollkommen abgedichtet wird.

11. Verfahren nach Anspruch 10, dadurch gekennzeichnet, daß die Anodenschicht (10) durch Aufdampfen im Hochvakuum bei senkrechtem Einfall aufgebracht wird.

12. Verfahren nach Anspruch 10, dadurch gekennzeichnet, daß dem Aufbringen der Anodenschicht (10) eine Stufe der Bildung der Mikrokatode (6, 14) am Boden der Ausnehmung (5, 7, 15) durch Aufdampfen im Hochvakuum unter senkrechtem Einfall vorangeht, wobei die Anodenschicht (10) dann durch Aufdampfen unter streifendem Einfall wenigstens auf Höhe der Öffnung der Mikroausnehmung (5, 7, 15) so aufgebracht wird, daß die zuvor gebildete Katode (6, 14) nicht verunreinigt wird.

13. Verfahren nach Anspruch 12, dadurch gekennzeichnet, daß der Stufe der Bildung der Mikrokatode (6, 14) einerseits eine Stufe der Aufbringung einer vorübergehenden Schicht vorangeht, die aus einem speziellen Material hergestellt ist, wobei dieses spezifische Material bezüglich des die Mikrokatode (6, 14) bildenden Materials selektiv lösbar ist, und andererseits eine Stufe der Auflösung der vorübergehenden Schicht folgt.

14. Verfahren nach Anspruch 10, dadurch gekennzeichnet, daß der Stufe der Aushöhlung der Mikroausnehmung (5, 7, 15) eine Stufe des Aufbringens einer Schicht (8) aus einem ein "Getter" bildenden Materials auf der zweiten dielektrischen Schicht vorangeht.

15. Verfahren nach einem der Ansprüche 10 bis 14, dadurch gekennzeichnet, daß die Stufe des Aufbringens der Anode (10) und/oder der Mikrokatode (6, 14) und, je nach Fall, der das "Getter" (8) bildenden Schicht dadurch verwirklicht wird, daß das Substrat (1) in eine Drehbewegung versetzt wird.

16. Verfahren nach einem der Ansprüche 10 bis 15, dadurch gekennzeichnet, daß das Aufbringen der Anodenschicht (10) im Vakuum in der Größenordnung von 10⁻¹⁰ Torr durchgeführt wird.

17. Verfahren nach einem der Ansprüche 10 bis 16, dadurch gekennzeichnet, daß vor dem Aufbringen der Anodenschicht (10) eine Entgasungsoperation durch Erhitzen des Leitersubstrats (1) auf eine Temperatur von etwa 700 bis 800°C durchgeführt wird.

18. Verfahren nach einem der Ansprüche 10 bis 17, dadurch gekennzeichnet, daß auf den Vorgang des Aufbringens der Anodenschicht (10) eine "in situ" durchgeführte Wärmebehandlungsstufe folgt.

19. Verfahren nach einem der Ansprüche 10 bis 18, dadurch gekennzeichnet, daß die Anodenschicht (10) mit einer Dicke zwischen etwa 1 µm und etwa 6 µm aufgebracht wird.

20. Verfahren nach einem der Ansprüche 10 bis 19, dadurch gekennzeichnet, daß die Gitterschicht (3) mit einer Dicke zwischen etwa 0,1 µm und etwa 0,3 µm aufgebracht wird.

21. Verfahren nach einem der Ansprüche 10 bis 20, dadurch gekennzeichnet, daß die das "Getter" (8) bildende Schicht mit einer Dicke zwischen etwa 0,1 und etwa 0,5 µm aufgebracht wird.
